# EUROPÄISCHE PATENTSCHRIFT

(11) **EP 3 514 948 B1**
(45) Veröffentlichungstag und Bekanntmachung des Hinweises auf die Patenterteilung: **01.04.2020**
(21) Anmeldenummer: 19150342.4
(22) Anmeldetag: 04.01.2019
(51) Int. Cl.: H02S 20/10, H02S 20/20

(54) **SOLARANLAGE SOWIE DEREN VERWENDUNG**
SOLAR INSTALLATION AND ITS USE
INSTALLATION SOLAIRE ET SON UTILISATION

(30) Priorität: 17.01.2018 LU 100678
(43) Veröffentlichungstag der Anmeldung: 24.07.2019
(73) Patentinhaber: BCAP GMBH, 66606 St. Wendel (DE)
(72) Erfinder: BECK, Achim, London, Greater London W18 8EJ (GB)
(74) Vertreter: Zeiner, Johannes Michael

(56) Entgegenhaltungen:
- WO-A2-2012/064189
- CN-A- 106 788 148
- FR-A3- 2 958 732
- JP-A- 2015 086 558

## Beschreibung

Die Erfindung betrifft eine Solaranlage, insbesondere Photovoltaikanlage, die mindestens ein Energieerzeugungselement sowie eine Einrichtung zum Halten des mindestens einen Energieerzeugungselements in einer Energieerzeugungsposition in Abstand von einem Untergrund aufweist. Ferner betrifft die Erfindung eine Verwendung der erfindungsgemäßen Solaranlage, wobei die Halteeinrichtung ein aus Strängen gebildetes Netz umfasst, das vorzugsweise wölbungsfrei oberhalb des Untergrundes angeordnet ist, und an dem das mindestens eine Energieerzeugungselement befestigbar ist.

Aus WO 2012/064189 A2 ist eine Solaranlage bekannt, die zwei im Wesentlichen parallele Netze aufweist, zwischen denen Solarmodule vertikal angeordnet sind.

Solaranlagen, die aus Aluminiumrohren gebildete Haltegestelle zur Aufnahme von großflächigen Solarmodulen aufweisen, sind außerdem aus dem Stand der Technik bekannt. Die Haltegestelle werden in einem Untergrund, der ein Dach eines Gebäudes oder eine Gebäudefassade sein kann, befestigt und halten die Solarmodule in Abstand von diesem Untergrund. Bei sogenannten Freilandanlagen werden Tragegestelle für die Solarmodule im Boden verankert. Bei jeder dieser Anwendungen trägt der Untergrund unmittelbar unterhalb der Module die Gesamtlast aus Modulen und Haltegestell sowie ggf. eine auf die Anlage wirkende Windlast. Daher können bekannte Photovoltaikanlagen nur dort installiert werden, wo der Untergrund ausreichend tragfähig ist und nicht weiter genutzt werden soll, beispielsweise landwirtschaftlich.
Dächer von Gebäuden und insbesondere von Industriehallen müssen zugänglich und begehbar sein, um beispielsweise das Dach selbst, Schornsteine oder Auslässe von Lüftungseinrichtungen warten oder reparieren zu können. Außerdem ist gerade das Dach einer Industriehalle nicht zur Aufnahme großer Lasten geeignet, was neben der fehlenden Zugänglichkeit gegen eine Installation einer Photovoltaikanlage spricht.

Der vorliegenden Erfindung liegt daher die Aufgabe zugrunde, eine Solaranlage der eingangs genannten Art zu schaffen, die besonders flach ausgebildet ist.

Erfindungsgemäß wird die Aufgabe dadurch gelöst, dass das mindestens eine Energieerzeugungselement in einer Masche des Netzes derart positioniert ist, dass ein erster Abschnitt des Energieerzeugungselements oberhalb wenigstens eines die Masche bildenden Strangs und ein weiterer Abschnitt des Energieerzeugungselements unterhalb wenigstens eines weiteren die Masche bildenden Stranges angeordnet ist.

Vorteilhaft kann eine Neigung des mindestens einen Energieerzeugungselements gegenüber einer Netzebene besonders gut eingestellt werden.

Weiter vorteilhaft muss der Untergrund unmittelbar unter dem Netz keine Last aufnehmen, so dass dessen Belastbarkeit bei einer Planung und Installation einer Solaranlage nicht berücksichtigt werden muss. Ferner ist eine Installation von Energieerzeugungselementen in einer festlegbaren Höhe oberhalb des Untergrundes möglich. Dadurch ist ein Bereich zwischen dem Untergrund und dem Netz frei zugänglich und weiterhin nutzbar, beispielsweise landwirtschaftlich.

Maschen des Netzes können dreieckig, viereckig, insbesondere rechteckig, rautenförmig, trapezförmig, hexagonal oder achteckig ausgebildet sein. Es ist denkbar, dass ein Netz unterschiedliche Maschenformen und/oder -größen aufweist. Eine geeignete Wahl einer Form der Maschen des Netzes kann die Festigkeit des gesamten Netzes verbessern. Bei geringer Belastung, beispielsweise an einer windgeschützten Gebäudefassade, ist ein Netz mit quadratischen Maschen ausreichend stabil, bei einer hohen Belastung, insbesondere durch Wind, ist ein Netz mit hexagonalen oder achteckigen Maschen vorteilhaft.

Einige der das Netz bildenden Stränge können von anderen Strängen verschiedene Eigenschaften aufweisen, beispielsweise unterschiedliche Festigkeiten, Steifigkeiten und/oder Durchmesser. Dadurch können mechanische Eigenschaften des Netzes auf einen Belastungsfall angepasst werden.

Das wenigstens eine Energieerzeugungselement kann an mindestens einer Kreuzungsstelle der Stränge mit dem Netz verbunden sein, vorzugsweise an zwei, drei oder vier, insbesondere sechs, acht oder zehn Kreuzungsstellen. Vorteilhaft kann eine besonders stabile Befestigung des Energieerzeugungselements bewirkt werden. Je höher die Anzahl der Verbindungsstellen mit dem Netz, desto höher ist eine Positionsstabilität des Energieerzeugungselements in der Energieerzeugungsposition, insbesondere bei Windbelastung.

Zweckmäßigerweise ist das Netz selbsttragend und vorzugsweise zwischen mindestens zwei Ständerelementen, die sich jeweils mit einer vertikalen Richtungskomponente von dem Untergrund weg erstrecken, angebracht, insbesondere aufgespannt.
Obwohl das Netz in geringem Abstand, beispielsweise wenige Zentimeter, oberhalb des Untergrundes angeordnet ein kann, beträgt ein kleinster Abstand des Netzes von dem Untergrund mindestens zwei Meter, insbesondere mindestens drei Meter, vorzugsweise mehr als fünf Meter. Dadurch sind beispielsweise ein Dach sowie darauf installierte Anlagen zugänglich und können problemlos gewartet oder repariert werden. Außerdem besteht vom Untergrund ausgehend Zugang zu Unterseiten der Energieerzeugungselemente, so dass beispielsweise Wartungsarbeiten durchgeführt werden können. Die Ständerelemente sind insbesondere aus Stahl, Aluminium und/oder Verbundwerkstoffen gefertigt und können unterschiedlich lang ausgebildet sein.

Die Stränge können zwischen den Ständerelementen gespannt sein, damit ein Energieerzeugungselement selbst bei Windeinwirkung in seiner Energieerzeugungsposition gehalten werden kann. Es versteht sind, dass nicht alle Stränge gespannt sein müssen. Äußere Stränge, deren Enden mit den Ständerelementen verbunden sind, können einen das Netz stabilisierenden Rahmen bilden und andere Eigenschaften, insbesondere einen anderen Strangdurchmesser und/oder andere mechanische Eigenschaften aufweisen und/oder aus einem anderen Material gebildet sind als innere Stränge des Netzes, deren Enden mit den äußeren Strängen verbunden sind.
Außerdem ist denkbar, dass das Netz gegenüber einem im Wesentlichen horizontalen Untergrund geneigt zwischen den Ständerelementen angeordnet ist. Dadurch sind an dem Netz angebrachte Energieerzeugungselemente in Richtung der Sonneneinstrahlung ausgerichtet. Vorteilhaft kann ein höherer Energieertrag der Solaranlage bewirkt werden.

In einer Ausgestaltung der Erfindung ist das Netz hexagonal, achteckig oder viereckig, insbesondere rautenförmig, parallelogrammförmig oder quadratisch ausgebildet und vorzugsweise zusammenrollbar und/oder zusammenlegbar.

Obwohl die Energieerzeugungselemente erst nach einer Anordnung des Netzes oberhalb eines Untergrundes angebracht werden können, werden diese vorzugsweise bereits vor einem Transport zu einem Installationsort mit dem Netz verbunden und als Einheit zusammengerollt. Dadurch ist ein platzsparender Transport möglich. Das Netz und die Energieerzeugungselemente können an dem Installationsort auf einfache Art und Weise ausgebreitet und montiert werden.
Durch die Form des Netzes kann eine besonders stabile Befestigung ermöglicht werden. Beispielsweise kann ein hexagonales Netz an mindestens sechs Punkten, insbesondere Eckpunkten, oberhalb eines Untergrundes angeordnet werden, während ein achteckiges Netz an mindestens acht Punkten, insbesondere Eckpunkten, oberhalb des Untergrundes angeordnet werden kann.

In einer weiteren Ausgestaltung der Erfindung sind die ein vorzugsweise wölbungsfreies Netz bildenden Stränge an Kreuzungsstellen miteinander verbunden, insbesondere durch Befestigungselemente, oder mindestens ein Strang des Netzes verläuft abwechselnd ober- und unterhalb von benachbarten, diesen Strang kreuzenden Strängen. Befestigungselemente können zwei sich kreuzende Stränge an Kreuzungsstellen beispielsweise nahezu vollständig ringförmig umschließen und/oder die Stränge könnten zwischen Schenkeln von Befestigungselementen eingeklemmt sein. Auch ist denkbar, das die Stränge an den Kreuzungsstellen miteinander verschweißt und/oder verklebt sind. Verläuft mindestens ein Strang abwechselnd ober- und unterhalb von benachbarten Strängen, weist das Netz wenigstens abschnittsweise eine gewebeartige Struktur auf. Vorteilhaft sind Befestigungselemente nicht unbedingt notwendig.

In einer Ausgestaltung der Erfindung sind die das Netz bildenden Stränge als Gurte oder Seile, insbesondere als Drahtseile, als Drahtseile mit einem Kern aus Kunststoff und/oder Kunstfasern, als aus einem elektrisch leitenden Material, insbesondere Aluminium und/oder Kupfer, gebildete Leiterseile und/oder als vorzugsweise lichtdurchlässige Kunstfaserseile ausgebildet.
Drahtseile weisen eine hohe Festigkeit, insbesondere Zugfestigkeit, bei einem geringem Gewicht auf und können über große Weiten gespannt werden. Ein Kern aus Kunststoff und/oder Kunstfasern kann vorteilhaft sein, um das Gewicht des Seiles zu verringern und/oder besonders gute mechanische Eigenschaften wie eine hohe Bruchfestigkeit zu bewirken.

Sind die Stränge als für Sonnenlicht transparente Kunstfaserseile ausgebildet, wird ein Schattenwurf, insbesondere auf den Untergrund und/oder auf wenigstens teilweise unterhalb des Netzes angeordnete Energieerzeugungselemente, fast vollständig vermieden.
Es versteht sich, dass das Netz auch aus Strängen mit unterschiedlichen Eigenschaften gebildet sein kann. Beispielsweise könnten äußere Stränge des Netzes, die mit Ständerelementen verbunden sind, als Drahtseil ausgebildet sein und innere Stränge, an denen Energieerzeugungselemente angebracht sind, aus einem Kunstfaserseil gebildet sein.

Zweckmäßigerweise ist das wenigstens eine Energieerzeugungselement in der Energieerzeugungsposition parallel oder geneigt zu einer von den Strängen gebildeten Netzebene angeordnet, wobei ein Neigungswinkel insbesondere 0 bis 80 Grad, vorzugsweise 20 bis 50 Grad beträgt.
Vorteilhaft kann eine optimale Lichteinstrahlung bewirkt werden.

Zweckmäßigerweise ist das mindestens eine Energieerzeugungselement auf einer dem Untergrund zugewandten Seite des Netzes, auf einer dem Untergrund abgewandten Seite des Netzes und/oder in einer Masche des Netzes angeordnet.
Eine Anordnung von Energieerzeugungselementen auf einer dem Untergrund zugewandten Seite, das heißt auf einer Unterseite, vereinfacht vorteilhaft eine Wartung, einen Austausch oder eine Montage einzelner Energieerzeugungselemente, da die Solaranlage von dem Untergrund aus zugänglich ist. Eine Anordnung der Energieerzeugungselemente in den Maschen hat den Vorteil, dass das Netz eine ebene Oberfläche aufweist, da Außenseiten der Energieerzeugungselemente bündig mit Oberseiten der Strängen abschließen können. Diese Anordnung ist vorteilhaft, wenn Energieerzeugungselemente mit geringer Festigkeit, beispielsweise folienförmige Elemente, die insbesondere organische Solarzellen aufweisen, genutzt werden. Die die Folie umgebenden Stränge bewirken eine besonderes gute Formstabilisierung der Folien, die zwischen den sie umgebenden Strängen gespannt sein können. Zur Befestigung der Folien können elastische oder feste Schnüre oder Seile genutzt werden. Eine Verklebung von an die Folien angeformten Laschen mit den Strängen ist denkbar.

In einer Ausgestaltung der Erfindung weisen Maschen bildende Stränge des Netzes unterschiedliche Eigenschaften auf, insbesondere voneinander verschiedene Durchmesser und/oder voneinander verschiedene mechanische Eigenschaften.Weisen die Stränge unterschiedliche Durchmesser auf, kann ein Neigungswinkel vorteilhaft weiter vergrößert oder verkleinert werden.

In einer weiteren Ausgestaltung der Erfindung ist ein Befestigungsmittel vorgesehen, durch das das mindestens eine Energieerzeugungselement mit dem Netz verbunden ist, das zur Leitung von elektrischem Strom eingerichtet ist, und das vorzugsweise ein mindestens zweiteiliges Befestigungselement umfasst, dessen Teile miteinander verbindbar sind, wobei ein erster Teil an dem Netz angeordnet ist und ein zweiter Teil an dem Energieerzeugungselement.
An dem Energieerzeugungselement angebrachte Teile eines Befestigungselements können auf unterschiedlichen Seiten, beispielsweise auf einer Ober- oder Unterseite, angeordnet sein. Die Teile des Befestigungselementes können miteinander verklebt sein oder mittels einer Steck- oder Rastverbindung miteinander verbunden sein. Vorteilhaft kann eine ausreichend feste und zugleich einfach handhabbare Verbindung der Energieerzeugungselemente mit dem Netz ausgebildet werden.
Es ist denkbar, dass das Befestigungselement, insbesondere der an dem Netz angeordnete Teil des Befestigungselements, zwei sich kreuzende Stränge des Netzes miteinander verbindet. Dadurch kann zugleich das Netz stabilisiert und ein Energieerzeugungselement besonders stabil an dem Netz angebracht werden.

In einer Ausgestaltung der Erfindung weisen einzelne Stränge Leiterlitzen zur Leitung von elektrischem Strom, vorzugsweise erzeugtem Gleichstrom, auf, die wenigstens teilweise in die Stränge eingebracht sind, wobei eine Polung der Leiterlitzen benachbarter Stränge unterschiedlich ist. Die Leiterlitzen sind vorteilhaft vor Witterungseinflüssen geschützt. Sie könnten außerdem einen Kern eines Strangs bilden oder in den Kern eingebracht sein. Es ist ferner denkbar, dass ein aus Kunstfasern gebildeter Kern eine Leiterlitze umfasst.

Zweckmäßigerweise ist mindestens eines der Ständerelemente in seiner Länge veränderbar und insbesondere teleskopartig ausgebildet.
Das Ständerelement kann als Pfeiler, Mast, Zylinder, Rohr oder Kegelstumpf ausgebildet sein. Durch eine Verlängerung mindestens eines Ständerelements kann das zwischen zwei Ständerelementen angeordnete Netz derart ausgerichtet werden, dass Energieerzeugungselemente optimal zur Sonne hin ausgerichtet sind. Ein Tragegestell, auf dem jedes einzelne Energieerzeugungselement unter einem Neigungswinkel montiert werden muss, ist nicht mehr notwendig.

Vorteilhaft könnte das Netz ferner vollständig mit Energieerzeugungselementen belegt werden. Ein Schattenwurf durch benachbarte Energieerzeugungselemente ist vorteilhaft ausgeschlossen.
Außerdem könnte das Netz bei einer Erstmontage spannungsfrei an bewegbaren Abschnitten der Ständerelemente angebracht sein und bei einer unterschiedlich großen Verlängerung einzelner der Ständerelemente zwischen diesen aufgespannt und insbesondere gleichzeitig in eine Energieerzeugungsposition geneigt werden.

In einer Ausgestaltung der Erfindung weist mindestens eines der Ständerelemente ein Verbindungsmittel auf, durch das das Ständerelement mit Enden der das Netz bildenden Stränge verbindbar ist, wobei das Verbindungsmittel ein Verbindungselement umfasst, das insbesondere ringförmig oder U-förmig ausgebildet ist und das Ständerelement in Umfangsrichtung wenigstens teilweise umschließt.
Beide Schenkel von U-förmigen Verbindungselementen können zur Verbindung von Strangenden mit dem Verbindungselement vorgesehen sein. Ein Basisschenkel des Verbindungselementes liegt mit einer Innenseite gegen eine Außenfläche des Ständerelements an und kann beispielsweise dort festgeschweißt oder festgeklebt sein.

Dadurch wird eine ortsfeste Anbringung des Verbindungselements an dem Ständerelement bewirkt. Ein ringförmiges Verbindungsmittel kann festgeschweißt oder festgeklebt sein. Eine kraftschlüssige Verbindung durch Aufschrumpfen eines ringförmigen Verbindungselements auf ein Ständerelement ist denkbar.
Vorzugsweise sind die Verbindungselemente an einem dem Untergrund abgewandten Ende der Ständerelemente angeordnet. Das Verbindungselement ist aus einem Metall gebildet, vorzugsweise aus Stahl, aus Aluminium und/oder aus einem Verbundwerkstoff.

Zweckmäßigerweise ist das Verbindungselement entlang einer Längsachse des Ständerelements derart bewegbar angeordnet, dass ein Abstand des Verbindungselements von dem Untergrund veränderbar ist, wobei das Verbindungselement insbesondere gegen das Ständerelement anliegende, dreh- und/oder arretierbare Rollen oder Räder aufweist. Vorteilhaft ist eine gesteuerte Bewegung mindestens eines Verbindungselements aus einer Ausgangsposition, in der das Netz spannungsfrei zwischen den Ständerelementen angeordnet sind, in eine Endposition, in der das Netz zwischen den Ständerelementen aufgespannt und das mindestens eine Energieerzeugungselement in der Energieerzeugungsposition gehalten wird, möglich.
Eine Kombination aus in der Länge veränderbaren Ständerelementen und daran angeordneten, bewegbaren Verbindungselementen ist denkbar.

Zweckmäßigerweise ist das mindestens eine Energieerzeugungselement eine Solarzelle und/oder ein Solarmodul, wobei das Solarmodul vorzugsweise siliziumbasierte Solarzellen, die insbesondere monokristallines, polykristallines und/oder amorphes Silizium aufweisen, Dünnschichtzellen, Konzentratorzellen, Mehrfachsolarzellen, organische Solarzellen, Hybrid-Solarzellen, Fluoreszenz-Solarzellen und/oder Perowskit aufweisende Solarzellen umfasst. Die Energieerzeugungselemente können starr, flexibel und/oder als Folie oder Membran ausgebildet sein. Solarmodule für siliziumbasierte Solarzellen können rahmenlos ausgebildet sein oder einen steifen Tragerahmen aufweisen, der die Solarzellen trägt. Auf einer Vorderseite, die der Sonne zugewandt ist, kann eine Scheibe, eine Folie oder eine Beschichtung zum Schutz der Solarzellen vor Verschmutzung und mechanischen Belastungen wie Hagel vorgesehen sein.

In einer bevorzugten Ausgestaltung der Erfindung umfasst das Energieerzeugungselement Solarzellen und/oder Solarmodule, die das Material Perowskit aufweisen, welches vorzugsweise kein Blei enthält. Vorteilhaft wird ein besonders hoher Wirkungsgrad bei der Energieerzeugung möglich. Ferner entsprechen Perowskit aufweisende, bleifreie Solarzellen oder Solarmodule den Anforderungen an einzuhaltende Umweltvorschriften.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: eine perspektivische Ansicht einer erfindungsgemäßen, oberhalb eines Flachdachs montierten Photovoltaikanlage,
- Fig. 2: eine weitere Ausführungsform einer erfindungsgemäßen, zwischen Türmen von vier Windkraftanlagen angeordneten Photovoltaikanlage in einer geschnittenen Draufsicht,
- Fig. 3: eine Detailansicht eines Verbindungselements im Querschnitt,
- Fig. 4: eine Anordnung eines Energieerzeugungselements an einem Netz einer erfindungsgemäßen Solaranlage in einer geschnittenen Seitenansicht,
- Fig. 5: eine Anordnung mehrerer Energieerzeugungselemente an einem Netz einer erfindungsgemäßen Solaranlage sowie deren Kontaktierung in einer Draufsicht.

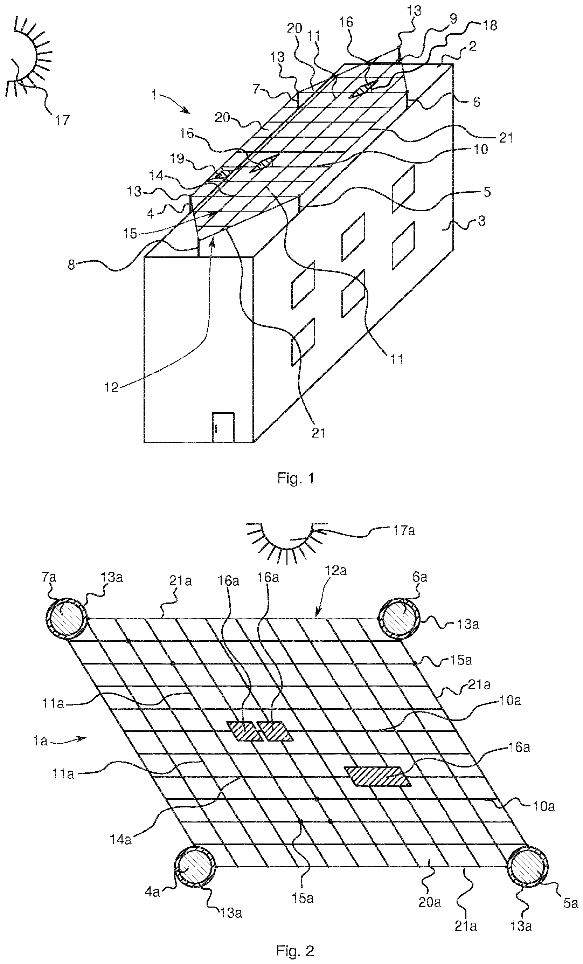

Eine in Fig. 1 gezeigte erfindungsgemäße Photovoltaikanlage (1) ist auf einem Flachdach (2) eines Wohngebäudes (3) installiert und umfasst sechs Stahlpfeiler (4, 5, 6, 7, 8, 9), die jeweils mit einem unteren Ende in dem (nicht im Detail gezeigten) Mauerwerk des Gebäudes (3) fest verankert sind.
Mehrere senkrecht zueinander verlaufende Drahtseile (10, 11), die einen Kunstfaserkern sowie Leiterlitzen aufweisen, bilden ein im Wesentlichen wölbungsfreies, hexagonales Drahtseilnetz (12), welches zwischen den Stahlpfeilern (4, 5, 6, 7, 8, 9) aufgespannt, parallel zu einer Dachoberfläche angeordnet und von der Dachoberfläche beabstandet ist. Enden der Drahtseile (10, 11) sind durch Verbindungselemente (13) mit den Stahlpfeilern (4, 5, 6, 7, 8, 9) verbunden. Dadurch, dass das Drahtseilnetz (12) in Abstand von der Dachoberfläche angeordnet ist, kann sowohl die erfindungsgemäße Photovoltaikanlage (1) installiert werden als auch das Dach (2) beispielsweise von Bewohnern des Gebäudes (3) genutzt werden.
An Kreuzungsstellen (14), an denen sich die Drahtseile (10, 11) kreuzen, sind die Seile durch Klemmelemente (15), die vorzugsweise aus einem Metall wie Stahl oder Aluminium gebildet sind, miteinander verbunden. Die Klemmelemente (15) umschließen jeweils zwei sich kreuzende Seile (10, 11) wenigstens teilweise und klemmen diese fest zwischen zwei Schenkeln ein. Es wäre auch denkbar, dass die Seile (10, 11) an den Kreuzungsstellen (14) verschweißt oder miteinander verklebt sind.

Auf dem Drahtseilnetz (12) sind flächige photovoltaische Energieerzeugungselemente (16), die von der Sonne (17) beschienen werden, in einer gegenüber dem Drahtseilnetz (12) geneigten Energieerzeugungsposition an mit dem Netz (12) verbundenen Tragegestellen (18) angebracht. Die Abstände der Energieerzeugungselemente (16) voneinander sind dabei derart gewählt, dass kein Schattenwurf auf benachbarte Elemente erfolgt.

Ein Energieerzeugungselement (19), vorzugsweise ein folienförmiges, flexibles Solarmodul, ist in einer Masche (20) des Netzes (12) angeordnet und durch vier Befestigungselemente mit vier Kreuzungsstellen (14) verbunden. Es versteht sich, dass mehr als die in Fig. 1 gezeigten drei Energieerzeugungselemente (16, 19) an dem Netz (12) befestigt sein können.

Die (nicht gezeigten) Leiterlitzen befinden sich wenigstens teilweise im Innern der Drahtseile, sind mit den Energieerzeugungselementen (16, 17) verbunden und leiten erzeugten Strom beispielsweise zu einem Verbraucher oder einem Wechselrichter. Die Maschen (20) des Netzes (12) sind in diesem Ausführungsbeispiel überwiegend drei- oder viereckig ausgebildet. Andere Ausbildungsformen, beispielsweise hexagonal, quadratisch oder achteckig, sind ebenso wie Mischformen denkbar.

Außerdem ist denkbar, dass die Drahtseile (10,11) ein Drahtseilgewebe bilden, das heißt die Drahtseile sind derart miteinander verwoben, dass jedes Drahtseil (10, 11) abwechselnd ober- oder unterhalb eines benachbarten Seils, das es kreuzt, verläuft.

Ferner könnte das Netz (12) gegenüber dem Dach (2) geneigt angeordnet sein. Dazu könnten die Stahlpfeiler (4, 5, 6, 7, 8, 9) unterschiedlich lang sein. Vorteilhaft könnte dann die gesamte Netzoberfläche nahezu lückenlos mit Energieerzeugungselementen (16, 19) belegt sein. Ein Schattenwurf auf ein Energieerzeugungselement durch ein benachbartes Element wäre ausgeschlossen. Die Energieerzeugungselemente (16) könnten mittels dem Fachmann bekannter Verbindungselemente, beispielsweise Schellen, mit dem Netz (12) verbunden werden. Tragegestelle (18) wären dann nicht mehr notwendig.

Auch wäre denkbar, dass die Energieerzeugungselemente (16, 19) unterhalb des Netzes (12) angebracht sind. Dadurch wäre eine Rückseite der Energieerzeugungselemente (16, 19) vom Dach (2) aus zugänglich, so dass Wartungsarbeiten oder ein Austausch auf einfache Art und Weise möglich wäre.

Es versteht sich, dass die Drahtseile nicht alle den gleichen Durchmesser aufweisen müssen oder gleicher Bauart sein müssen. So ist denkbar, dass mit zwei Stahlpfeilern (4, 5, 6, 7, 8, 9 verbundene, äußere Drahtseile (21) mit vorzugsweise größerem Durchmesser einen Rahmen des Drahtseilnetzes (12) bilden und Drahtseile (10, 11) im Innern dieses Rahmens einen geringeren Durchmesser und/oder eine geringere Festigkeit als die Rahmenseile (21) aufweisen.

Ferner ist denkbar, dass mindestens einer der Pfeiler (4, 5, 6, 7, 8, 9), vorzugsweise alle, in seiner bzw. ihrer Länge veränderbar ist bzw. sind, so dass ein Abstand zwischen dem Netz (12) und dem Flachdach (2) bedarfsgerecht angepasst werden kann. Durch eine Verlängerung einzelner Stahlpfeiler (4, 5, 6, 7, 8, 9) ist ferner eine an einen Sonnenstand angepasste Ausrichtung der Energieerzeugungselemente (16, 19) möglich. Dadurch würde die Energieerzeugungsposition durch eine Veränderung des Neigungswinkels des Netzes (12) an einen Sonnenstand angepasst, wodurch ein höherer Energieertrag der Photovoltaikanlage (1) erreicht werden kann. Außerdem könnte ein weiterer Stahlpfeiler vorgesehen sein, der nicht im Mauerwerk des Gebäudes (3) verankert ist, sondern an der Dachoberfläche befestigt ist. Wäre der Pfeiler beispielsweise in der Mitte des Dachs angebracht, könnte das Netz (12) weiter stabilisiert werden und einer größeren Windlast widerstehen.

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Eine in Fig. 2 gezeigte erfindungsgemäße Photovoltaikanlage (1a) ist zwischen Türmen (4a, 5a, 6a, 7a) von insgesamt vier Windkraftanlagen angebracht. Drahtseile (10a, 11a, 21a) bilden ein im Wesentlichen wölbungsfreies Drahtseilnetz (12a), welches die Form eines Parallelogramms aufweist. Maschen (20a) des Netzes (12a) sind parallelogrammförmig ausgebildet. An Kreuzungsstellen (14a) sind die Seile (10a, 11a, 21a) mit Klemmelementen (15a) verbunden. Das Netz (12a) ist senkrecht zu Längsachsen der im Wesentlichen zylindrischen Türme (4a, 5a, 6a, 7a) in Abstand von einem Untergrund, der eine Land- oder Wasserfläche sein kann, gespannt. Auf dem Drahtseilnetz (12a) werden flächige Solarmodule (16a) in einer gegenüber dem Drahtseilnetz (12a) geneigten Energieerzeugungsposition, in der sie von der Sonne (17a) beschienen werden, mittels in Fig. 1 gezeigter Tragegestelle angebracht.

Eine Befestigung der flächigen Module (16a) parallel zu dem Drahtseilnetz (12a) ist denkbar. Dann müsste das Drahtseilnetz (12a) gegenüber einer Längsachse der Türme (4a, 5a, 6a, 7a) geneigt angebracht sein, so dass die Module (16a) in ihrer optimalen Energieerzeugungsposition, in der ein maximal möglicher Energieertrag erzielt wird, gehalten werden.

In einigen der Drahtseile (10a, 11a, 21a) des Netzes (12a) sind Leiterlitzen eingebracht, die sich wenigstens teilweise im Innern der Drahtseile (10a, 11a, 21a) befinden und die mit den Energieerzeugungselementen (16a) elektrisch verbunden sind und den erzeugten Strom beispielsweise zu einem Wechselrichter leiten.

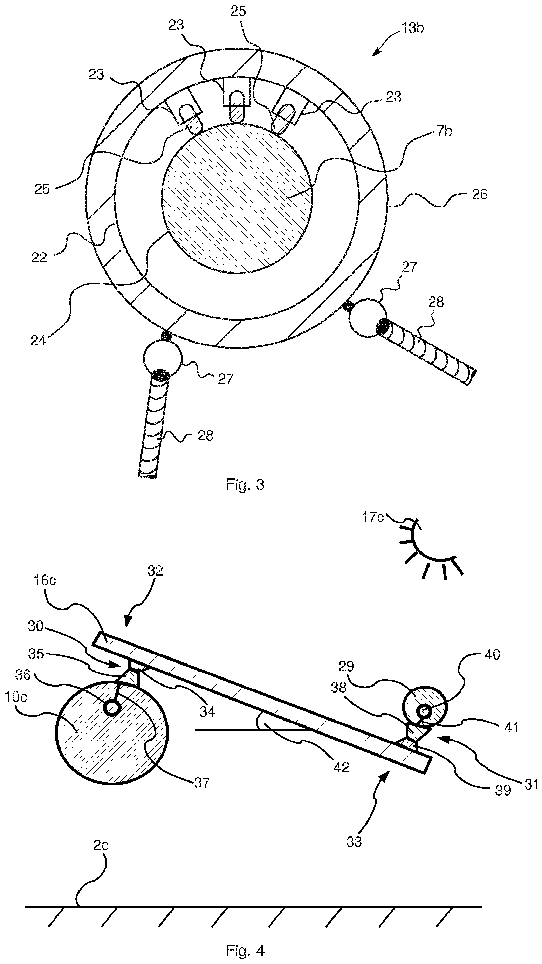

Außerdem könnten Verbindungselemente (13; 13a) vorgesehen sein, die Enden von ein Netz (12; 12a) bildenden Drahtseilen (10, 11, 21; 10a, 11a, 21a) mit Ständerelementen (4, 5, 6, 7, 8, 9; 4a, 5a, 6a, 7a) verbinden und die zur Veränderung ihrer Position entlang der Längsachse der Ständerelemente (4, 5, 6, 7, 8, 9; 4a, 5a, 6a, 7a) bewegbar sind. Bei einer gesteuerten Bewegung einiger der Verbindungselemente (13; 13a) würde das Netz (12; 12a) gespannt werden. Dadurch könnte eine Erstmontage vereinfacht werden und Spannungsverluste, die eine Wölbung des Netzes (12; 12a) bewirken, könnten ausgeglichen werden. Außerdem könnte das Netz durch eine Bewegung einzelner Verbindungselemente (13; 13a) in eine geneigte Position, beispielsweise in Richtung der Sonne (17; 17a), gebracht werden. Details eines Verbindungselements (13; 13a) zeigt Fig. 3.

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Ein in Fig. 3 gezeigtes Verbindungselement (13b) ist ringförmig ausgebildet und umschließt einen Turm (7b) einer Windkraftanlage vollständig. Auf einer Innenseite (22) des Verbindungselements sind in Umfangsrichtung nebeneinander in vorzugsweise gleichem Abstand drei U-förmige Elemente (23) angebracht, die jeweils eine gegen eine Außenseite (24) des Turms (4b) anliegende, drehbare Rolle (25) halten. Die Rollen (25) sind in einem Winkel zwischen 30 und 45 Grad zueinander angeordnet, vorzugsweise 45 Grad.
Auf einer einem Drahtseilnetz zugewandten Außenseite (26) des Verbindungselements (13b) sind Ösen (27) angebracht, die zur Aufnahme von Seilenden (28) von das Netz bildenden Drahtseilen vorgesehen sind. Je nach Drehrichtung der Rollen (25) wird das Verbindungselement (13b) in Richtung eines Untergrunds oder von einem Untergrund weg bewegt. Dazu kann wenigstens eine der Rollen (25) angetrieben sein.

Es ist denkbar, dass an ein Verbindungselement (13; 13a; 13b) (nicht gezeigte) Seile oder Stangen angebracht sind, die eine Bewegung in Längsrichtung eines Ständerelements (4, 5, 6, 7, 8, 9; 4a, 5a, 6a, 7a) durch Zug- oder Druckkräfte bewirken. Durch eine gesteuerte Bewegung mehrerer Verbindungselemente (13; 13a; 13b) kann ein Netz (12; 12a) in eine bestimme, vorzugsweise geneigte Position gebracht werden, in der sich die Energieerzeugungselemente (16, 19; 16a, 19a) in einer Energieerzeugungsposition befinden, in der ein höherer Energieertrag möglich ist. Außerdem könnte das Netz (12; 12a) durch diese Bewegung aus einer spannungsfreien Befestigungsposition in eine Befestigungsposition bewegt werden, in der es zwischen den Ständerelementen (4, 5, 6, 7, 8, 9; 4a, 5a, 6a, 7a) aufgespannt ist.

In einer nicht gezeigten Ausführungsform sind Energieerzeugungselemente (16, 19; 16a, 19a) in Maschen (20; 20a) eines Netzes (12; 12a), vorzugsweise parallel zu einer Netzebene, angeordnet. Wären die Module (16, 19; 16a, 19a) als flexible Folienelemente ausgebildet, wäre das Netz (12; 12a) mit den daran befestigten Energieerzeugungselementen (16, 19; 16a, 19a) beispielsweise auf eine Haspel aufrollbar. Dadurch wäre eine einfachere Erstmontage sowie ein Ab- und Wiederaufbau an einem anderen Ort möglich: Das Netz (12; 12a) mit den Energieerzeugungselementen (16, 19; 16a, 19a) könnte abgerollt und zwischen Ständerelementen (4, 5, 6, 7, 8, 9; 4a, 5a, 6a, 7a) gespannt werden. Zwei separate Arbeitsschritte, Spannen des Netzes (12; 12a) und Anbringen der Energieerzeugungselemente (16, 19; 16a, 19a) wären nicht notwendig.

Es wird nun auf Fig. 4 Bezug genommen, wo gleiche oder gleichwirkende Teile mit derselben Bezugszahl wie in Fig. 1, 2 und 3 bezeichnet sind und der betreffenden Bezugszahl jeweils der Buchstabe c beigefügt ist.

Ein in Fig. 4 im Querschnitt gezeigtes Energieerzeugungselement (16c) ist mit zwei benachbarten Seilen (10c, 29) eines Netzes durch zweiteilige Befestigungselements (30, 31) verbunden. Das erste Seil (10c) ist als Drahtseil ausgebildet, während das zweite Seil (29) als ein für Sonnenlicht transparentes Kunstfaserseil ausgebildet ist. Ein obererer Abschnitt (32) des Energieerzeugungselements (16c) ist auf einer der Sonne (17c) zugewandten Seite des Drahtseils (10c) angeordnet, ein unterer Abschnitt (33) auf einer der Sonne (17c) abgewandten Seite des Kunstfaserseils (29). Dadurch, dass das Kunstfaserseil (29) für Sonnenlicht transparent ist, erfolgt kein signifikanter Schattenwurf auf den unteren Abschnitt (33) des Energieerzeugungselementes (16c).

Ein oberer Teil (34) des Befestigungselements (30) ist auf einer Unterseite des Energieerzeugungselements (16c) angebracht, ein unterer Teil (35) an dem Drahtseil (10c), das im Innern eine mit Kunststoff ummantelte Leiterlitze (36) führt. Die beiden Teile (34, 35) können beispielsweise durch eine Steck- oder Rastverbindung miteinander verbunden sein. Das Befestigungselement (30) ist außerdem als elektrisches Verbindungselement eingerichtet, welches das Energieerzeugungselement (16c) mittels eines Kontaktdrahts (37) mit der Leiterlitze (36) elektrisch verbindet.

Ein oberer Teil (38) des Befestigungselements (31) ist auf einer Unterseite des transparenten Kunstfaserseils (29) angebracht, ein unterer Teil (39) auf einer Oberseite des Energieerzeugungselements (16c). Die beiden Teile (38, 39) können beispielsweise durch eine Steck- oder Rastverbindung miteinander verbunden sein. Im Innern des Kunstfaserseils (29) verläuft eine Leiterlitze (40) in Seilrichtung, die durch das Befestigungselement (31) sowie einen Kontaktdraht (41) elektrisch mit dem Energieerzeugungselement (16c) verbunden ist. Die Leiterlitze (36) bildet einen Pluspol, die Leiterlitze (40) einen Minuspol.
Dadurch, dass der Durchmesser des Drahtseils (10c) wesentlich größer als der Durchmesser des Kunstfaserseils (29) ist, ist das Energieerzeugungselement (16c) gegenüber einer Netzebene in einer Energieerzeugungsposition zur Sonne (17c) um einen Winkel (42) geneigt. Es versteht sich, dass der Neigungswinkel (42) beispielsweise vergrößert oder verkleinert werden könnte, wenn die Befestigungselemente (30, 31) unterschiedlich lang ausgebildet wären.
Es versteht sich, dass jedes der Befestigungselemente (30, 31) auch zwei sich kreuzende Stränge miteinander verbinden könnte. Dazu könnte insbesondere der obere Teil (38) oder der untere Teil (35) die beiden sich kreuzenden Stränge zumindest teilweise umschließen.

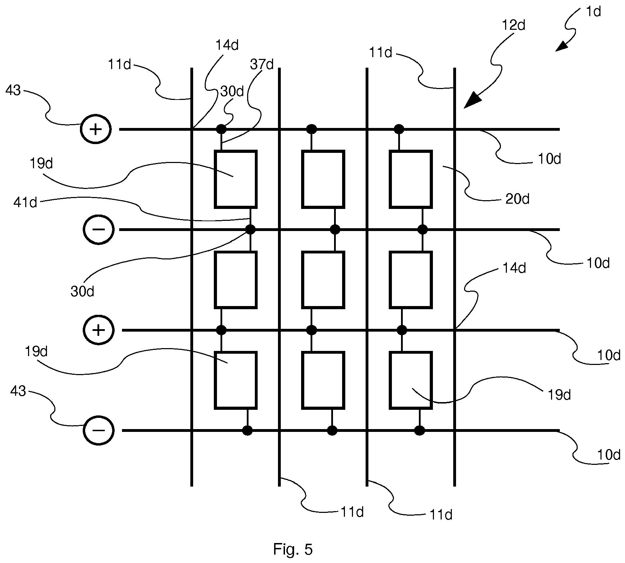

Es wird nun auf Fig. 5 Bezug genommen, wo gleiche oder gleichwirkende Teile mit derselben Bezugszahl wie in Fig. 1, 2, 3 und 4 bezeichnet sind und der betreffenden Bezugszahl jeweils der Buchstabe d beigefügt ist.

Bei einem in Fig. 5 gezeigten Ausschnitt einer erfindungsgemäßen Photovoltaikanlage (1d) sind in Maschen (20d) eines aus senkrecht zueinander verlaufenden Strängen (10d, 11d) gebildetes Netzes (12d) Energieerzeugungselemente (19d) in Abstand von den sie umgebenden Strängen (10d, 11d) vorzugsweise spannungsfrei und parallel zu einer Netzebene angeordnet. Benachbarte, in Fig. 5 horizontal verlaufende Stränge (10d) weisen Leiterlitzen auf und sind mit den Energieerzeugungselementen (19d) derart elektrisch leitend verbunden, dass zwei eine Masche (20d) begrenzende obere und untere Stränge (10d) entgegengesetzte Pole (43) bilden. In der in Fig. 5 gezeigten Anordnung alternieren die Pole (43), wobei horizontal benachbarte Energieerzeugungselemente (19d) parallel geschaltet sind. Es versteht sich, dass eine Reihenschaltung denkbar ist. Eine separate elektrische Leitung, die erzeugten Storm von dem Energieerzeugungselement (19d) beispielsweise zu einem Wechselrichter leitet, ist nicht notwendig.
Ein Verbindungselement (30d) ist derart ausgebildet, dass es zwei vertikal benachbarte Energieerzeugungselemente (19d) elektrisch mit den Strängen (10d) verbindet.

## Patentansprüche

1. Solaranlage (1a; 1b; 1d), insbesondere Photovoltaikanlage, die mindestens ein Energieerzeugungselement (16, 19; 16a; 16c; 19d) sowie eine Einrichtung zum Halten des mindestens einen Energieerzeugungselements (16, 19; 16a; 16c; 19d) in einer Energieerzeugungsposition in Abstand von einem Untergrund (2; 2c) aufweist, wobei die Halteeinrichtung ein aus Strängen (10, 11, 21, 10a, 11, 21a; 10c, 29; 10d, 11d) gebildetes Netz (12; 12a; 12d) umfasst, das vorzugsweise wölbungsfrei oberhalb des Untergrundes (2; 2c) angeordnet ist, und an dem das mindestens eine Energieerzeugungselement (16, 19; 16a; 16c; 19d) befestigbar ist
**dadurch gekennzeichnet,**
**dass** das mindestens eine Energieerzeugungselement (16c) in einer Masche (20; 20a; 20d) des Netzes (12; 12a; 12d) derart positioniert ist, dass ein erster Abschnitt (32) des Energieerzeugungselements (16c) oberhalb wenigstens eines die Masche (20; 20a; 20d) bildenden Strangs (10c) und ein weiterer Abschnitt (33) des Energieerzeugungselements (16c) unterhalb wenigstens eines weiteren die Masche bildenden Stranges (29) angeordnet ist.

2. Solaranlage nach Anspruch 1,
**dadurch gekennzeichnet,**
**dass** das Netz (12; 12a; 12 d) selbsttragend und vorzugsweise zwischen mindestens zwei Ständerelementen (3, 4, 5, 6, 7, 8, 9; 4a, 5a, 6a, 7a), die sich jeweils mit einer vertikalen Richtungskomponente von dem Untergrund (2; 2c) weg erstrecken, angebracht, insbesondere aufgespannt, ist.

3. Solaranlage nach Anspruch 1 oder 2,
**dadurch gekennzeichnet,**
**dass** das Netz (12; 12a; 12d) hexagonal, achteckig oder viereckig, insbesondere rautenförmig, parallelogrammförmig oder quadratisch ausgebildet und vorzugsweise zusammenrollbar und/oder zusammenlegbar ist.

4. Solaranlage nach einem der Ansprüche 1 bis 3,
**dadurch gekennzeichnet,**
**dass** die ein vorzugsweise wölbungsfreies Netz (12; 12a; 12d) bildenden Stränge (10, 11, 21, 10a, 11, 21a; 10c, 29; 10d, 11d) an Kreuzungsstellen (14; 14a; 14d) miteinander verbunden sind, insbesondere durch Befestigungselemente (15; 15a),oder dass mindestens ein Strang (10, 11, 21, 10a, 11, 21a; 10c, 29; 10d, 11d) des Netzes (12; 12a; 12d) abwechselnd ober- und unterhalb von benachbarten, diesen Strang kreuzenden Strängen verläuft.

5. Solaranlage nach einem der Ansprüche 1 bis 4,
**dadurch gekennzeichnet,**
**dass** die das Netz bildenden Stränge (10, 11, 21, 10a, 11, 21a; 10c, 29; 10d, 11d) als Gurte oder Seile, insbesondere als Drahtseile, als Drahtseile mit einem Kern aus Kunststoff und/oder Kunstfasern, als aus einem elektrisch leitenden Material, insbesondere Aluminium und/oder Kupfer, gebildete Leiterseile und/oder als vorzugsweise lichtdurchlässige Kunstfaserseile (29) ausgebildet sind.

6. Solaranlage nach einem der Ansprüche 1 bis 5,
**dadurch gekennzeichnet,**
**dass** das wenigstens eine Energieerzeugungselement (16, 19; 16a; 16c; 19d) in der Energieerzeugungsposition parallel oder geneigt zu einer von den Strängen (10, 11, 21, 10a, 11, 21a; 10c, 29; 10d, 11d) gebildeten Netzebene angeordnet ist, wobei ein Neigungswinkel (42) insbesondere 0 bis 80 Grad, vorzugsweise 20 bis 50 Grad beträgt.

7. Solaranlage nach einem der Ansprüche 1 bis 6,
**dadurch gekennzeichnet,**
**dass** das mindestens eine Energieerzeugungselement (16, 19; 16a; 16c; 19d) auf einer dem Untergrund (2; 2c) zugewandten Seite des Netzes (12; 12a; 12d), auf einer dem Untergrund (2; 2c) abgewandten Seite des Netzes (12; 12a; 12d) und/oder in einer Masche (20; 20a; 20d) des Netzes (12; 12a; 12d) angeordnet ist.

8. Solaranlage nach einem der Ansprüche 1 bis 7,
**dadurch gekennzeichnet,**
**dass** Maschen (20; 20a; 20d) bildende Stränge (10c, 29) des Netzes (12; 12a; 12d) unterschiedliche Eigenschaften aufweisen, insbesondere voneinander verschiedene Durchmesser und/oder voneinander verschiedene mechanische Eigenschaften.

9. Solaranlage nach einem der Ansprüche 1 bis 8,
**dadurch gekennzeichnet,**
**dass** ein Befestigungsmittel (30, 31) vorgesehen ist, durch das das mindestens eine Energieerzeugungselement mit dem Netz (12; 12a; 12d) verbunden ist, das zur Leitung von elektrischem Strom eingerichtet ist, und das vorzugsweise ein mindestens zweiteiliges Befestigungselement (30, 31) umfasst, dessen Teile (34, 35, 38, 39) miteinander verbindbar sind, wobei ein erster Teil (35, 38) an dem Netz angeordnet ist und ein zweiter Teil (34, 39) an dem Energieerzeugungselement (16c).

10. Solaranlage nach einem der Ansprüche 1 bis 9,
**dadurch gekennzeichnet,**
**dass** einzelne Stränge (10, 11, 21, 10a, 11, 21a; 10c, 29; 10d, 11d) Leiterlitzen (36, 40) zur Leitung von elektrischem Strom, vorzugsweise erzeugtem Gleichstrom, aufweisen, die wenigstens teilweise in die Stränge (10, 11, 21, 10a, 11, 21a; 10c, 29; 10d, 11d) eingebracht sind, wobei eine Polung der Leiterlitzen benachbarter Stränge (10, 11, 21, 10a, 11, 21a; 10c, 29; 10d, 11d) unterschiedlich ist.

11. Solaranlage nach einem der Ansprüche 2 bis 10,
**dadurch gekennzeichnet,**
**dass** mindestens eines der Ständerelemente (3, 4, 5, 6, 7, 8, 9; 4a, 5a, 6a,7a) in seiner Länge veränderbar und insbesondere teleskopartig ausgebildet ist.

12. Solaranlage nach einem der Ansprüche 2 bis 11,
**dadurch gekennzeichnet,**
**dass** mindestens eines der Ständerelemente (3, 4, 5, 6, 7, 8, 9; 4a, 5a, 6a,7a) ein Verbindungsmittel aufweist, durch das das Ständerelement (3, 4, 5, 6, 7, 8, 9; 4a, 5a, 6a,7a) mit Enden (28) der das Netz (12; 12a; 12d) bildenden Stränge (10, 11, 21, 10a, 11, 21a; 10c, 29; 10d, 11d) verbindbar ist, wobei das Verbindungsmittel ein Verbindungselement (13; 13a; 13b) umfasst, das insbesondere ringförmig oder U-förmig ausgebildet ist und das Ständerelement (3, 4, 5, 6, 7, 8, 9; 4a, 5a, 6a,7a) in Umfangsrichtung wenigstens teilweise umschließt.

13. Solaranlage nach Anspruch 12,
**dadurch gekennzeichnet,**
**dass** das Verbindungselement (13; 13a; 13b) entlang einer Längsachse des Ständerelements (3, 4, 5, 6, 7, 8, 9; 4a, 5a, 6a,7a) derart bewegbar angeordnet ist, dass ein Abstand des Verbindungselements (13; 13a; 13b) von dem Untergrund (2; 2c) veränderbar ist, wobei das Verbindungselement (13; 13a; 13b) insbesondere gegen das Ständerelement (3, 4, 5, 6, 7, 8, 9; 4a, 5a, 6a,7a) anliegende, dreh- und/oder arretierbare Rollen (23) oder Räder aufweist.

14. Solaranlage nach einem der Ansprüche 1 bis 13,
**dadurch gekennzeichnet,**
**dass** das mindestens eine Energieerzeugungselement (16, 19; 16a; 16c; 19d) eine Solarzelle und/oder ein Solarmodul ist, wobei das Solarmodul vorzugsweise siliziumbasierte Solarzellen, die insbesondere monokristallines, polykristallines und/oder amorphes Silizium aufweisen, Dünnschichtzellen, Konzentratorzellen, Mehrfachsolarzellen, organische Solarzellen, Hybrid-Solarzellen, Fluoreszenz- Solarzellen und/oder Perowskit aufweisende Solarzellen umfasst.

15. Verwendung einer Solaranlage nach einem der Ansprüche 1 bis 14 auf einem Dach (2) oder an einer Fassade eines Gebäudes (3), insbesondere auf einem Dach (2) oder einer Fassade eines Wohngebäudes (3), auf einem Dach einer Industriehalle, angeordnet zwischen Türmen (4a, 5a, 6a, 7a) von Windkraftanlagen oder oberhalb eines statisch nicht belastbaren, zugänglich zu haltenden oder landwirtschaftlich zu nutzenden Untergrundes (2; 2c), beispielsweise oberhalb einer Wasseroberfläche, einer kontaminierten Bodenfläche oder eines Moores zur Erzeugung von elektrischem Strom.

## Claims

1. Solar installation (1a; 1b; 1d), in particular photovoltaic installation, comprising at least one energy generating element (16, 19; 16a; 16c; 19d) and a device for holding the at least one energy generating element (16, 19; 16a; 16c; 19d) in a power generation position at a distance from a ground (2; 2c), the holding device comprising a net (12; 12a; 12d) formed from strands (10, 11, 21, 10a, 11, 21a; 10c, 29; 10d, 11d), which is preferably arranged without arching above the ground (2; 2c), and on which the at least one power generating element (16, 19; 16a; 16c; 19d) can be fastened,
**characterized in that**
the at least one energy generating element (16c) is positioned in a mesh (20; 20a; 20d) of the net (12; 12a; 12d) such that a first portion (32) of the energy generating element (16c) is positioned above at least one strand (10c) forming the mesh (20; 20a; 20d) and a further portion (33) of the energy generating element (16c) is positioned below at least one further strand forming the mesh (29).

2. Solar installation according to claim 1,
**characterized in that**
the net (12; 12a; 12d) is self-supporting and preferably mounted, in particular stretched, between at least two support elements (3, 4, 5, 6, 7, 8, 9; 4a, 5a, 6a, 7a), each of which extends with a vertical directional component away from the ground (2; 2c).

3. Solar installation according to claim 1 or 2,
**characterized in that**
the net (12; 12a; 12d) is hexagonal, octagonal or square, in particular diamond-shaped, parallelogram-shaped or quadratic and can preferably be coiled and/or folded.

4. Solar installation according to one of claims 1 to 3,
**characterized in that**
the strands (10, 11, 21, 10a, 11, 21a; 10c, 29; 10d, 11d) forming a preferably curvature-free net (12; 12a; 12d) are connected to one another at crossing points (14; 14a; 14d), in particular by fastening elements (15; 15a), or **in that** that at least one strand (10, 11, 21, 10a, 11, 21a; 10c, 29; 10d, 11d) of the net (12; 12a; 12d) extends alternately above and below adjacent strands crossing said strand.

5. Solar installation according to one of claims 1 to 4,
**characterized in that**
the strands (10, 11, 21, 10a, 11, 21a; 10c, 29; 10d, 11d) forming the net are formed as belts or ropes, in particular as wire ropes, as wire ropes with a core of plastic and/or synthetic fibres, as conductor cables made of an electrically conductive material, in particular aluminium and/or copper, and/or as preferably translucent synthetic fibre ropes (29).

6. Solar installation according to one of the claims 1 to 5,
**characterized in that**
the at least one power generating element (16, 19; 16a; 16c; 19d) is arranged parallel or inclined to a the network plane formed by the strands (10, 11, 21, 10a, 11, 21a; 10c, 29; 10d, 11d) in the power generation position, wherein an angle of inclination (42) is in particular between 0 and 80 degrees, preferably between 20 and 50 degrees.

7. Solar installation according to one of claims 1 to 6,
**characterized in that**
the at least one power generating element (16, 19; 16a; 16c; 19d) is arranged on a side of the net (12; 12a; 12d) facing the ground (2; 2c), on a side of the net (12; 12a; 12d) facing away from the ground (2; 2c) and/or in a mesh (20; 20a; 20d) of the net (12; 12a; 12d).

8. Solar installation according to one of claims 1 to 7,
**characterized in that**
strands (10c, 29) of the net (12; 12a; 12d) forming meshes (20; 20a; 20d) have different properties, in particular different diameters and/or different mechanical properties.

9. Solar installation according to one of claims 1 to 8,
**characterized in that**
a fastening means (30, 31) is provided, by means of which the at least one power generating element is connected to the network (12; 12a; 12d), which is set up for conducting electric current, and which preferably comprises an at least two-part fastening element (30, 31), the parts (34, 35, 38, 39) of which can be connected to one another, a first part (35, 38) being arranged on the net and a second part (34, 39) being arranged on the power generating element (16c).

10. A solar installation according to one of claims 1 to 9,
**characterized in that**
individual strands (10, 11, 21, 10a, 11, 21a; 10c, 29; 10d, 11d) comprise conductor strands (36, 40) for conducting electric current, preferably generated direct current, which are at least partially inserted into the strands (10, 11, 21, 10a, 11, 21a; 10c, 29; 10d, 11d), wherein a polarity of the conductor strands of adjacent strands (10, 11, 21, 10a,11, 21a; 10c, 29; 10d, 11d) is different.

11. Solar installation according to one of claims 2 to 10,
**characterized in that**
at least one of the support elements (3, 4, 5, 6, 7, 8, 9; 4a, 5a, 6a, 7a) is variable in its length and in particular telescopic.

12. Solar installation according to one of the claims 2 to 11,
**characterized in that**
at least one of the support elements (3, 4, 5, 6, 7, 8, 9; 4a, 5a, 6a, 7a) has a connecting means by which the support element (3, 4, 5, 6, 7, 8, 9; 4a, 5a, 6a, 7a) can be connected with ends (28) of the strands (10, 11, 21) forming the net (12; 12a; 12d), 10a, 11, 21a; 10c, 29; 10d, 11d), wherein the connecting means comprises a connecting element (13; 13a; 13b), which is in particular annular or U-shaped
and at least partially encloses the support element (3, 4, 5, 6, 7, 8, 9; 4a, 5a, 6a, 7a) in the circumferential direction.

13. Solar installation according to claim 12,
**characterized in that**
the connecting element (13; 13a; 13b) is arranged movably along a longitudinal axis of the support element (3, 4, 5, 6, 7, 8, 9; 4a, 5a, 6a, 7a) such that a distance of the connecting element (13; 13a; 13b) from the ground (2; 2c) can be changed, wherein the connecting element (13; 13a; 13b) comprises in particular rotatable and/or lockable rollers (23) or wheels abutting against the support element (3, 4, 5, 6, 7, 8, 9; 4a, 5a, 6a, 7a).

14. Solar installation according to one of claims 1 to 13,
**characterized in that**
the at least one energy generating element (16, 19; 16a; 16c; 19d) is a solar cell and/or a solar module, wherein the solar module comprises preferably silicon-based solar cells, which in particular comprise monocrystalline, polycrystalline and/or amorphous silicon, thin-film cells, concentrator cells, multiple solar cells, organic solar cells, hybrid solar cells, fluorescent solar cells and/or perovskite comprising solar cells.

15. Use of a solar installation according to one of claims 1 to 14 for the generation of electrical energy, placed on a roof (2) or on a facade of a building (3), in particular on a roof (2) or a facade of a residential building (3), placed on a roof of an industrial hall, between towers (4a, 5a, 6a, 7a) of wind turbines or above a static not resilient ground (2; 2c) which is to be held accessible or to be used for agricultural purposes , for example above a water surface, a contaminated soil or a bog.

## Revendications

1. Installation solaire (1a; 1; 1d), en particulier installation photovoltaïque, qui comprend au moins un élément de génération d'énergie (16, 19, 16a, 16c, 19d) et un dispositif pour maintenir le au moins un élément de génération d'énergie (16, 19, 16a, 16c, 19d) dans une position de production d'énergie à distance d'un sol (2, 2c), le dispositif de maintien comprenant un filet (12, 12a, 12d) formé de brins (10, 11, 21, 10a, 11, 21a, 10c, 29, 10d, 11d), qui est de préférence disposé sans bombement au-dessus du sol (2, 2c) et sur lequel le au moins un élément de génération d'énergie (16, 19, 16a, 16c, 19d) peut être fixé,
**caractérisé en ce**
**qu'**au moins un élément de génération d'énergie (16c) est positionné dans une maille (20, 20a, 20d) du filet (12, 12a, 12d) telle qu'une première partie (32) de l'élément de génération d'énergie (16c) est disposée au-dessus d'au moins un brin (10c) formant la maille (20, 20a, 20d) et une autre partie (33) de l'élément de génération d'énergie (16c) est disposée au-dessous d'au moins un autre brin (29) formant la maille.

2. Installation solaire selon la revendication 1,
**caractérisé en ce**
**que** le filet (12, 12a, 12d) est autoportant et de préférence monté, en particulier tendu, entre au moins deux éléments de support (3, 4, 5, 6, 7, 8, 9, 4a, 5a, 6a, 7a), dont chacun s'étend avec une composante directionnelle verticale à partir de du sol (2, 2c).

3. Installation solaire selon la revendication 1 ou 2,
**caractérisé en ce**
**que** le filet (12, 12a, 12d) est hexagonal, octogonal ou quadrangulaire, en particulier en forme de losange, de parallélogramme ou de carré et est de préférence enroulable et/ou repliable.

4. Installation solaire selon l'une des revendications 1 à 3,
**caractérisé en ce**
**que** les brins (10, 11, 21, 10a, 11, 21a, 10c, 29, 10d, 11d) formant un filet de préférence sans courbure (12, 12a, 12d) sont reliés entre eux aux points de croisement (14, 14a, 14d), notamment par des éléments de fixation (15, 15a), ou qu'au moins un brin (10, 11, 21, 10a, 11, 21a, 10c, 29, 10d, 11d) du filet (12, 12a, 12d) passe alternativement au-dessus et au-dessous de brins adjacents croisant ce brin.

5. Installation solaire selon l'une des revendications 1 à 4,
**caractérisé en ce**
**que** les brins (10, 11, 21, 10a, 11, 21a, 10c, 29, 10d, 11d) formant le filet sont formés comme des courroies ou des câbles, en particulier comme des câbles métalliques, comme des câbles métalliques avec une âme en matière plastique et/ou en fibres synthétiques, comme des câbles conducteurs formés d'un matériau électriquement conducteur, en particulier d'aluminium et/ou de cuivre, et/ou comme des câbles de préférence en fibres synthétiques translucides (29).

6. Installation solaire selon l'une des revendications 1 à 5,
**caractérisé en ce**
**qu'**au moins un élément de génération d'énergie (16, 19, 16a, 16c, 19d) en position de génération d'énergie est disposé parallèlement ou incliné par rapport à un plan de réseau formé par les brins (10, 11, 21, 10a, 11, 21a, 10c, 29, 10d, 11d), un angle d'inclinaison (42) étant en particulier de 0 à 80 degrés, de préférence de 20 à 50 degrés.

7. Installation solaire selon l'une des revendications 1 à 6,
**caractérisé en ce**
**que** le au moins un élément de génération d'énergie (16, 19, 16a, 16c, 19d) est disposé sur un côté du réseau (12, 12a, 12d) tourné vers le sol (2, 2c), sur un côté du réseau (12; 12a; 12d) opposé au sol (2, 2c) et/ou dans une maille (20, 20a, 20d) du filet (12, 12a; 12d).

8. Installation solaire selon l'une des revendications 1 à 7,
**caractérisé en ce**
**que** les brins (10c, 29) du filet (12, 12a, 12d) formant les mailles (20, 20a, 20d) ont des propriétés différentes, en particulier des différents diamètres et/ou propriétés mécaniques différentes.

9. Installation solaire selon l'une des revendications 1 à 8,
**caractérisé en ce**
**qu'**il est prévu un moyen de fixation (30, 31) au moyen duquel le au moins un élément de génération d'énergie est relié au filet (12, 12a, 12d) et qui est conçu pour conduire le courant électrique et qui comprend de préférence un élément de fixation (30, 31) en au moins deux parties, dont les parties (34, 35, 38, 39) peuvent être reliées entre elles, une première partie (35, 38) étant disposée sur le réseau et une deuxième partie (34, 39) sur l'élément de génération d'énergie (16c).

10. Installation solaire selon l'une des revendications 1 à 9,
**caractérisé en ce**
**que** les différentes brins (10, 11, 21, 10a, 11, 21a, 10c, 29, 10d, 11d) comprennent des torons conducteurs (36, 40) pour conduire le courant électrique, de préférence le courant continu généré, qui sont au moins partiellement insérés dans les brins (10, 11, 21, 10a, 11, 21a, 10c, 29, 10d, 11d), dans lequel une polarité des brins conducteurs de brins adjacents (10, 11, 21, 10a, 11, 21a, 10c, 29, 10d, 11d) est différente.

11. Installation solaire selon l'une des revendications 2 à 10,
**caractérisé en ce**
**qu'**au moins un des éléments de support (3, 4, 5, 6, 7, 8, 9, 4a, 5a, 6a, 7a) est de longueur variable et en particulier télescopique.

12. Installation solaire selon l'une des revendications 2 à 11,
**caractérisé en ce**
**qu'**au moins un des éléments de support (3, 4, 5, 6, 7, 8, 9, 4a, 5a, 6a, 7a) comprend un moyen de liaison par lequel l'élément de support (3, 4, 5, 6, 7, 8, 9, 4a, 5a, 6a, 7a) est relié aux extrémités (28) des brins (10, 11, 21, 10a, 11, 21a, 10c, 29, 10d, 11d) formant le filet (12, 12a, 12d), le moyen de liaison comprenant un élément de liaison (13, 13a, 13b) qui est en particulier annulaire ou en forme de U et entoure au moins partiellement l'élément de support (3, 4, 5, 6, 7, 8, 9, 4a, 5a, 6a, 7a) dans la direction circonférentielle.

13. Installallation solaire selon la revendication 12,
**caractérisé en ce**
**que** l'élément de liaison (13, 13a, 13b) est disposé de manière mobile le long d'un axe longitudinal de l'élément de support (3, 4, 5, 6, 7, 8, 9, 4a, 5a, 6a, 7a) de telle sorte qu'une distance de l'élément de liaison (13, 13a, 13b) par rapport au sol (2, 2c) est variable, l'élément de liaison (13, 13a, 13b) comprenant des rouleaux (23) ou des roues rotatives et/ou verrouillables qui appuyent en particulier sur l'élément de support (3, 4, 5, 6, 7, 8, 9, 4a, 5a, 6a, 7a).

14. Installation solaire selon l'une des revendications 1 à 13,
**caractérisé en ce**
**que** le ou les éléments de génération d'énergie (16, 19, 16a, 16c, 19d) sont une cellule solaire et/ou un module solaire, le module solaire comprenant de préférence des cellules solaires à base de silicium, qui comprennent notamment du silicium monocristallin, polycristallin et/ou amorphe, des cellules à couche mince, des cellules de concentrateur, des cellules solaires multiples, des cellules solaires organiques, des cellules solaires hybrides, des cellules solaires comprenant des cellules solaires fluorescentes et/ou des cellules solaires comprenant de la pérovskite.

15. Utilisation d'une installation solaire pour la production d'énergie électrique selon l'une des revendications 1 à 14 sur un toit (2) ou sur une façade d'un bâtiment (3), en particulier sur un toit (2) ou une façade d'un bâtiment d'habitation (3), sur un toit d'un bâtiment à usage industriel, disposé entre les tours (4a, 5a, 6a, 7a) des éoliennes ou au-dessus d'un sol (2, 2c) statiquement non résilient qui doit être maintenu accessible ou utilisé à des fins agricoles, par exemple au-dessus d'une surface d'eau, d'un surface de sol contaminée ou une tourbière.
